# EUROPÄISCHE PATENTSCHRIFT

(11) **EP 3 532 261 B1**
(45) Veröffentlichungstag und Bekanntmachung des Hinweises auf die Patenterteilung: **25.08.2021**
(21) Anmeldenummer: 16785536.0
(22) Anmeldetag: 26.10.2016
(51) Int. Cl.: B29C 45/16, B29C 45/04

(54) **HALTEVORRICHTUNG FÜR WENDESYSTEM**
HOLDING DEVICE FOR A TURNING SYSTEM
DISPOSITIF DE RETENUE POUR SYSTÈME DE RETOURNEMENT

(43) Veröffentlichungstag der Anmeldung: 04.09.2019
(73) Patentinhaber: Foboha (Germany) GmbH, 77716 Haslach (DE)
(72) Erfinder: ARMBRUSTER, Rainer, 77709 Wolfach (DE)
(74) Vertreter: Rentsch Partner AG
(86) Internationale Anmeldenummer: PCT/EP2016/075813
(87) Internationale Veröffentlichungsnummer: WO 2018/077399

(56) Entgegenhaltungen:
- WO-A1-2011/107395
- WO-A1-2014/140019
- WO-A1-2014/195263
- WO-A1-2015/158702

## Beschreibung

Die vorliegende Erfindung liegt auf dem Gebiet der Werkzeuge und Maschinen zum Spritzgiessen von Kunststoff.

Aus dem Stand der Technik sind Spritzgiessvorrichtungen mit einem oder mehreren drehenden Mittelteilen bekannt. Diese werden z.B. zur effizienten Herstellung von mehrkomponentigen Kunststoffteilen durch Spritzgiessen verwendet. Zwischen zwei entlang von Holmen gegeneinander in einer ersten Richtung verfahrbaren Formhälften ist mindestens ein drehbares Mittelteil angeordnet, das an einer Haltevorrichtung befestigt und um eine Drehachse drehbar angeordnet ist. Das drehbare Mittelteil weist mindestens zwei parallele Seitenflächen auf, entlang derer es mit den beiden Formhälften zur Bildung von Kavitäten zusammenwirkt. In gewissen Ausführungsformen kann der drehbare Mittelteil zumindest auf einer Seite mit einem weiteren drehbaren Mittelteil zusammenwirken. Koordinationsmittel bewirken, dass der drehbare Mittelteil beim Öffnen und beim Schliessen mittig zwischen den beiden Formhälften positioniert bleibt und so Kollisionen vermieden werden. Aus dem Stand der Technik sind diverse Haltevorrichtungen für den drehbaren Mittelteil bekannt.

EP1035959 und EP1155802 derselben Anmelderin wurden 1999 publiziert und betreffen beide eine Haltevorrichtung für ein drehbares Mittelteil (Form, Formhälfte, Formträger). Die Haltevorrichtung weist eine untere und eine obere Traverse auf, welche entlang der Holme einer Spritzgiessmaschine geführt sind. Jede Traverse der Haltevorrichtung weist ein drehbares Haltemittel auf, welches zum lösbaren Einspannen der Form, Formhälfte oder des Formträgers dazwischen dient.

EP1725386 derselben Anmelderin wurde 2005 publiziert und betrifft ein Verfahren und eine Spritzgiessvorrichtung mit mehr als einem drehbaren Mittelteil. Damit besteht die Möglichkeit, Teile in zwei äusseren Trennebenen herzustellen und diese in einem weiteren Verarbeitungsschritt in einer weiteren Trennebene zu montieren. In den Figuren sind unterschiedliche Ausgestaltungen von Haltevorrichtungen für die drehbaren Mittelteile dargestellt.

WO2011/107395 derselben Anmelderin wurde 2011 publiziert und beschreibt eine Haltevorrichtung mit modularem Aufbau, welche flexibel auf unterschiedliche Spritzgiessmaschinen angepasst werden kann. Es werden unterschiedliche Arten der Halterung beschrieben.

WO2014/140019 derselben Anmelderin wurde 2014 publiziert und beschreibt eine Haltevorrichtung für einen drehbaren Mittelteil. Die Haltevorrichtung wird in Umfangsrichtung an den Holmen einer Spritzgiessmaschine abgestützt, was ein effizienteres Drehen zulässt.

EP1119449 von der Fa. Krauss Maffei wurde 2001 erstmals publiziert und zeigt eine Zweiplatten-Horizontalspritzgiessmaschine. Diese weist eine auf dem Maschinenbett gelagerte Haltevorrichtung für einen drehbaren Mittelteil auf. Die Erfindung besteht darin, dass die Haltevorrichtung komplett von den Holmen losgelöst und mit diesen keine Wirkverbindung aufweist. Alle auftretenden Kräfte werden über das Maschinenbett übertragen.

Eine Aufgabe der Erfindung besteht darin, eine Spritzgiessvorrichtung mit einer verbesserten Haltevorrichtung für einen drehbaren Mittelteil in einer Spritzgiessvorrichtung zu zeigen, welche kürzere Zykluszeiten ermöglicht. Die Aufgabe wird gelöst durch eine Spritzgiessvorrichtung gemäß dem Gegenstand des Anspruchs 1. Weitere Ausführungen der Erfindung sind den abhängigen Ansprüchen zu entnehmen.

Um die Produktionskapazität zu steigern ist die Reduktion der Zykluszeit ein taugliches Mittel. Allerdings treten dabei auch höhere Kräfte auf, weil die Maschinenteile stärker beschleunigt und abgebremst werden müssen, damit sie mit dem Maschinentakt Schritt halten können. Die optimale Einleitung und Übertragung der Kräfte ist ein wichtiger Aspekt, um die Robustheit und die Langlebigkeit der Vorrichtung garantieren zu können. Sich negativ auswirkende Zwangskräfte sind zu vermeiden. Ein Aspekt der Erfindung besteht darin, die Kräfte und deren Fluss gezielt auf mehrere Maschinenelemente aufzuteilen. Dabei werden die Gewichtslasten und die Drehmomente, welche zwischen einem drehbaren Mittelteil, bzw. einer Haltevorrichtung für diesen, und einer Spritzgiessmaschine teilweise oder ganz getrennt übertragen. Aus WO2014/140019 derselben Anmelderin ist bereits ein System bekannt, welches eine bessere Verteilung der Kräfte in Umfangsrichtung ermöglicht. Ein Aspekt der hier offenbarten Erfindung ist darauf gerichtet, ein für spezielle Spritzgiessmaschinen optimiertes System zu zeigen, welches einen effizienteren Betrieb derselben ermöglicht.

In einer Ausführungsform weist die erfindungsgemässe Vorrichtung mindestens eine auf einem Maschinenbett der Spritzgiessmaschine abgestützte und in Längsrichtung von Holmen der Spritzgiessmaschine verschiebbare Basis auf. Die Vorrichtung umfasst in der Regel eine untere Haltevorrichtung für einen um eine vertikale Achse drehbaren Formmittelteil in einer Spritzgiessmaschine. Die untere Haltevorrichtung kann einen um eine Drehachse drehbaren und über einen Motor angetriebenen ersten, unteren Drehteller aufweisen, der zur Aufnahme, bzw. Halterung des drehbaren Formmittelteils dient. Bei Bedarf können mehrere Haltevorrichtungen hintereinander angeordnet sein.

In einer Ausführungsform umfasst die Haltevorrichtung eine Basis, welche über transversal zueinander in einem gewissen Abstand angeordnete erste Lagerblöcke in vertikaler Richtung gegenüber dem Maschinenbett einer Spritzgiessmaschine abgestützt in Längsrichtung der Spritzgiessmaschine (in Richtung der Holmen) verschiebbar gelagert ist. Zweite Lagerblöcke, welche ebenfalls in Längsrichtung verschiebbar sind, dienen zur Abstützung der Basis gegenüber dem Maschinenbett in Umfangsrichtung und sind in Längsrichtung (x) der Spritzgiessmaschine verschiebbar gelagert. Die zweiten Lagerblöcke können in vertikaler Richtung auf derselben Höhe wie die ersten Lagerblöcke angeordnet sein. Die ersten und die zweiten Lagerblöcke können bei Bedarf zumindest auf einer Seite mittels derselben Führungsschienen gegenüber dem Maschinenbett abgestützt sein.

In einer Ausführungsform sind die zweiten Lagerblöcke für eine optimale Kräfteverteilung in vertikaler Richtung unterhalb der ersten Lagerblöcke angeordnet. In der Regel sind die ersten Lagerblöcke über erste Führungsschienen und die zweiten Lagerblöcke über zweite Führungsschienen mit dem Maschinenbett wirkverbunden. Die Führungsschienen sind in der Regel paarweise angeordnet, d.h. zwei erste und zwei zweite Führungsschienen. Die ersten und die zweiten Führungsschienen dienen in der Regel zur Übertragung von Kräften in unterschiedlicher Richtung. In gewissen Ausführungsformen werden beidseits entlang des Maschinenbettes der Spritzgiessmaschine angeordnete, profilierte Führungsschienen verwendet, welche eine sehr präzise und reibungsarme Führung ermöglichen und entsprechend der zu übertragenden Kräfte angeordnet sind. Gute Resultate werden mit sog. Profilschienenführungen (Linearführungen) erzielt.

Für eine optimale Aufteilung der Kräfte werden die ersten und die zweiten Führungsschienen , bzw. die mit diesen zusammenwirkenden ersten und zweiten Lagerblöcke, mit Vorteil in einem Winkel von 90° zueinander angeordnet. Je nach Anwendungsgebiet und Ausgestaltung, z.B. für den Fall, dass unterschiedliche erste und zweite Führungsschienen, bzw. entsprechende Lagerblöcke zum Einsatz kommen, können auch andere Winkel zur Anwendung kommen.

Insbesondere, wenn das Maschinenbett der Spritzgiessmaschine aus zwei in Längsrichtung verlaufenden Trägern, oder ähnlichen Strukturteilen besteht, welche direkt oder indirekt miteinander wirkverbunden sind und zwischen denen sich in horizontaler, bzw. transversaler Richtung ein Zwischenraum erstreckt, werden die ersten Führungsschienen mit Vorteil oberhalb der Träger und die zweiten Führungsschienen seitlich an den Trägern, innerhalb des Zwischenraumes befestigt. Die ersten und die zweiten Führungsschienen übertragen in der Regel Kräfte in unterschiedlicher Richtung. In dieser Anordnung befinden sich die zweiten Lagerblöcke in transversaler Richtung innerhalb der ersten Lagerblöcke. Die zweiten Lagerblöcke können in Längsrichtung ausserhalb der ersten Lagerblöcke angeordnet sein und so Momente nicht nur um die Hochachse absorbieren. Um Zwangskräfte zu verhindern, können die ersten und/oder die zweiten Lagerblöcke gegenüber der Basis zumindest in einem der sechs Freiheitsgrade (drei Verschiebungen / drei Rotationen bezüglich der drei Raumachsen) schwimmend gelagert sein. Zur besseren Einstellbarkeit können die ersten bezüglich der zweiten Lagerblöcke gegenüber justierbar angeordnet sein. Die zweiten Lagerblöcke können paarweise an einer Führungsschiene angeordnet sein. Eine Basis kann in gewissen Fällen auch als (flächige) Grundplatte ausgestaltet sein. Mindestens ein zweiter Lagerblock kann auf der Grundplatte angeordnet sein. Mindestens ein zweiter Lagerblock kann lösbar mit der Traverse wirkverbunden sein. Alternativ oder in Ergänzung können auf der Aussenseite der Träger dritte Lagerblöcke mit dazugehörigen (wirkverbundenen) dritten Führungsschienen angeordnet sein. In einer Ausführungsform liegen die dritten Führungsschienen ebenfalls unterhalb der ersten Führungsschienen, in etwa auf der Höhe der zweiten Lagerschienen.

Anhand der in den nachfolgenden Figuren gezeigten Ausführungsbeispiele und der dazugehörigen Beschreibung werden Aspekte der Erfindung näher erläutert. Es zeigen:
- Fig. 1: eine erfindungsgemässe Haltevorrichtung für einen Formmittelteil von vorne;
- Fig. 2: die Haltevorrichtung gemäss Figur 1 in einer Seitenansicht;
- Fig. 3: die Haltevorrichtung gemäss Figur 1 in einer perspektivischen Darstellung von schräg oben;
- Fig. 4: die Haltevorrichtung gemäss Figur 1 in einer perspektivischen Darstellung von schräg unten.

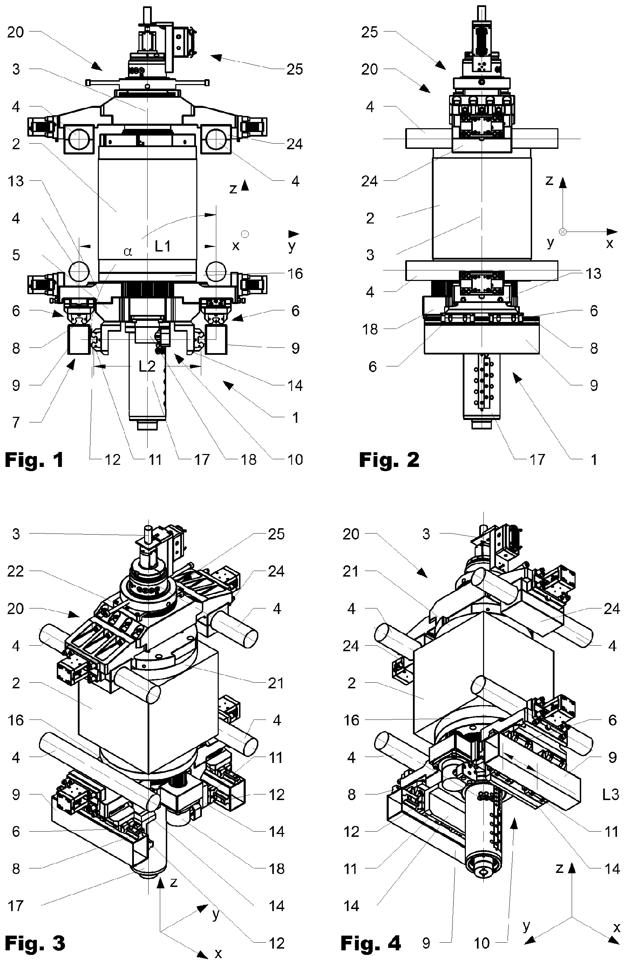

**Figur 1** zeigt eine erfindungsgemässe untere Haltevorrichtung 1 für einen Formmittelteil 2 in einer Ansicht von vorne. **Figur 2** zeigt die Haltevorrichtung 1 in einer Seitenansicht. **Figur 3** zeigt die Haltevorrichtung 1 in einer perspektivischen Darstellung von schräg vorne und oben und **Figur 4** von schräg hinten und unten.

Die untere Haltevorrichtung 1 dient zur Halterung eines Formmittelteils 2, während dem Spritzgiessen von Kunststoffteilen in einer Spritzgiessmaschine. Der Formmittelteil 2 ist in der Regel um eine vertikal angeordnete Drehachse 3 drehbar angeordnet. Weiterhin ist die untere Haltevorrichtung 1 in Längsrichtung (x-Achse) der Spritzgiessmaschine verschiebbar angeordnet. Die untere Haltevorrichtung 1 weist eine Basis 5 auf, welche über erste Lagerblöcke 6 in vertikaler Richtung (z) gegenüber einem Maschinenbett 7 der Spritzgiessmaschine abgestützt und auf ersten Führungsschienen 8 in Längsrichtung (x) der Spritzgiessmaschine verschiebbar gelagert ist. Das Maschinenbett 7 besteht in der gezeigten Ausführungsform aus zwei in Längsrichtung (x) verlaufenden Trägern 9, welche direkt oder indirekt miteinander wirkverbunden sind und zwischen denen sich in horizontaler (x), bzw. transversaler (y) Richtung ein Zwischenraum 10 erstreckt. Die ersten Führungsschienen 8 sind in der gezeigten Ausführungsform auf den Trägern 9 angeordnet und mit diesen wirkverbunden. Sie sind in einem ersten Abstand L1 zueinander angeordnet.

Im Zwischenraum 10 zwischen den Trägern 9 sind zweite Lagerblöcke 11 angeordnet, welche die Basis 5 gegenüber den Trägern 9 des Maschinenbettes 7 in Umfangsrichtung, d.h. um die Drehachse 3 abstützen. Die zweiten Lagerblöcke 11 sind in Längsrichtung (x) der Spritzgiessmaschine entlang von zweiten Führungsschienen 12, welche in einem zweiten Abstand L2 zueinander angeordnet sind, verschiebbar gelagert. Das Verhältnis des zweiten zum ersten Abstand L2/L1 liegt vorzugsweise in einem Bereich von 65% bis 90%. Je nach Ausgestaltung und Anordnung können andere Werte realisiert werden.

In der gezeigten Ausführungsform sind die zweiten Lagerblöcke 11 in vertikaler Richtung (z) unterhalb der ersten Lagerblöcke 6 angeordnet. Währenddem die ersten Führungsschienen 8 oberhalb der Träger 9 angeordnet sind, sind die zweiten Führungsschienen 12 seitlich an den Trägern 9 innerhalb des Zwischenraumes 10 befestigt. Die ersten und die zweiten Führungsschienen übertragen Kräfte in unterschiedlicher Richtung. Bei den ersten und den zweiten Führungsschienen 8, 12 handelt es sich mit Vorteil um Profilschienen, welche mit entsprechend ausgebildeten Lagerblöcken 6, 11 zusammenwirken. In der gezeigten Ausführungsform sind die ersten und die zweiten Führungsschienen 8, 12, bzw. die ersten und die zweiten Lagerblöcke 6, 11 vom selben Typ und in einem Winkel von 90° zueinander angeordnet.

Je nach Spritzgiessmaschinen können die zweiten Lagerblöcke 11 in vertikaler Richtung (z) auf derselben Höhe oder aber oberhalb der ersten Lagerblöcke 6 angeordnet sein. In gewissen Ausführungsvarianten können die ersten Lagerblöcke 6 und die zweiten Lagerblöcke 11 mittels derselben Führungsschienen gegenüber dem Maschinenbett abgestützt sein (nicht weiter dargestellt). Wie zu erkennen ist, sind die zweiten Lagerblöcke 11 in transversaler Richtung (y) innerhalb der ersten Lagerblöcke 6 angeordnet. Dies ermöglicht eine noch platzsparendere und damit effizientere Anordnung im Maschinenbett 7 der Spritzgiessmaschine. In Längsrichtung gesehen können die zweiten Lagerblöcke 11 ausserhalb der ersten Lagerblöcke 6 angeordnet sein. Dies ermöglicht eine bessere Abstützung und Verteilung der Kräfte und Momente um die Drehachse 3. Bei Bedarf können die zweiten Lagerblöcke 11 auch nur auf einer Seite angeordnet sein.

Jeder der ersten Lagerblöcke 6 ist über einen ersten Adapter 13 mit der Basis 5 wirkverbunden. Jeder der zweiten Lagerblöcke 11 ist über einen zweiten Adapter 14 mit der Basis 5 wirkverbunden. Der modulare Aufbau ermöglicht eine einfache Anpassung der unteren Haltevorrichtung 1 an Spritzgiessmaschinen mit unterschiedlichen Maschinenbetten. Je nach Ausgestaltung können die ersten und/oder die zweiten Adapter 13, 14 in die Basis integriert oder unlösbar mit dieser, bzw. miteinander wirkverbunden sein. Die zweiten Lagerblöcke 11 sind gegenüber den ersten Lagerblöcken 6 mit Vorteil justierbar angeordnet, so dass eine einfache Anpassung an unterschiedliche Bedingungen möglich ist. Um Ungenauigkeiten auszugleichen, können die ersten Lagerblöcke 6 in x- und/oder y-Richtung und die zweiten Lagerblöcke 11 in x- und /oder z-Richtung schwimmend gelagert sein. Undefinierte Lagerungszustände sollten dabei jedoch vermieden werden, sofern die Freiheitsgrade nicht anderweitig gesperrt sind. In der gezeigten Ausführungsform sind die Lagerblöcke 6, 11 paarweise entlang der Führungsschienen 8, 12 angeordnet. Je nach Ausführungsvariante können kann zumindest eine der Führungsschienen 8, 12 in einen der Träger 9 integriert sein, bzw. der Träger 9 selber als Führungsschiene dienen.

Der untere Drehteller 16 ist über eine untere Dreheinheit 17 mit der Basis 5 wirkverbunden. Ein Antriebsmotor 18 dient zum Antreiben des Drehtellers 16 gegenüber der Basis 5.

In der gezeigten Ausführungsform ist der Formmittelteil 2 über eine obere Haltevorrichtung 20 gegenüber den oberen beiden Holmen 4 der Spritzgiessmaschine gelagert. Je nach Ausführungsform und Anwendungsgebiet kann die obere Haltevorrichtung 20 auch weggelassen werden. Die obere Haltevorrichtung 20 weist einen oberen Drehteller 21 auf, welcher über eine obere Dreheinheit 22 an einer oberen Basis 23 befestigt ist. Die obere Basis ist über Lagerschalen 24 in Längsrichtung (x) der oberen Holmen 4 verschiebbar gelagert. Der untere und der obere Drehteller 16, 21 sind über eine Verstelleinrichtung 25 in axialer Richtung (z) relativ zueinander verschiebbar, so dass der dazwischen angeordnete Formmittelteil 2 einfach entnommen und eingesetzt werden kann.

Je nach Ausgestaltung und Anwendungsgebiet beträgt das Verhältnis des Abstandes L2, zwischen den zweiten Lagerblöcken 11 in transversaler Richtung, und L3, zwischen zwei zweiten Lagerblöcken in Längsrichtung, 60%-1 50%.

**LISTE DER BEZUGSZEICHEN**

| | | | |
|---|---|---|---|
| α | Winkel (Führungsschienen) | 11 | Zweite Lagerblöcke |
| L1 | Abstand erste Lagerschienen | 12 | Zweite Führungsschienen |
| L2 | Abstand zweite Lagerschienen | 13 | Ersten Adapter |
| L3 | Abstand zwischen zweiten Lagerblöcken | 14 | Zweiten Adapter |
| | | 15 | |
| 1 | Untere Haltevorrichtung | 16 | Unterer Drehteller |
| 2 | Formmittelteil (Würfel) | 17 | Untere Dreheinheit |
| 3 | Drehachse (Formmittelteil) | 18 | Antriebsmotor |
| 4 | Holme (Spritzgiessmaschine) | 19 | |
| 5 | Basis / untere Basis | 20 | Obere Haltevorrichtung |
| 6 | Erste Lagerblöcke | 21 | Oberer Drehteller |
| 7 | Maschinenbett | 22 | Obere Dreheinheit |
| 8 | Ersten Führungsschienen | 23 | Obere Basis |
| 9 | Träger (Maschinenbett) | 24 | Obere Lagerschalen |
| 10 | Zwischenraum | 25 | Vertelleinrichtung |

## Patentansprüche

1. Spritzgiessvorrichtung mit einer Haltevorrichtung (1) für einen Formmittelteil (2) in einer Spritzgiessmaschine mit einer Basis (5) welche über erste Lagerblöcke (6) in vertikaler Richtung (z) gegenüber dem Maschinenbett (7) der Spritzgiessmaschine abgestützt in Längsrichtung (x) der Spritzgiessmaschine verschiebbar gelagert ist, **dadurch gekennzeichnet, dass** die Basis (5) über zweite Lagerblöcke (11) in Umfangsrichtung gegenüber dem Maschinenbett (7) der Spritzgiessmaschine abgestützt in Längsrichtung (x) der Spritzgiessmaschine verschiebbar gelagert ist.

2. Spritzgiessvorrichtung mit einer Haltevorrichtung (1) gemäss Patentanspruch 1, **dadurch gekennzeichnet, dass** die zweiten Lagerblöcke (11) in vertikaler Richtung (z) unterhalb der ersten Lagerblöcke (6) angeordnet sind.

3. Spritzgiessvorrichtung mit einer Haltevorrichtung (1) gemäss einem der vorangehenden Patentansprüche, **dadurch gekennzeichnet, dass** die ersten Lagerblöcke (6) über erste Führungsschienen (8) und die zweiten Lagerblöcke (11) über zweite Führungsschienen (12) mit dem Maschinenbett wirkverbunden sind.

4. Spritzgiessvorrichtung mit einer Haltevorrichtung (1) gemäss Patentanspruch 3, **dadurch gekennzeichnet, dass** die ersten und die zweiten Führungsschienen (8, 12) in einem Winkel zueinander angeordnet sind.

5. Spritzgiessvorrichtung mit einer Haltevorrichtung (1) gemäss Patentanspruch 4, **dadurch gekennzeichnet, dass** der Winkel im Bereich zwischen 45° bis 90° beträgt.

6. Spritzgiessvorrichtung mit einer Haltevorrichtung (1) gemäss einem der vorangehenden Patentansprüche **dadurch gekennzeichnet, dass** die zweiten Lagerblöcke (11) in transversaler Richtung (y) innerhalb der ersten Lagerblöcke (6) angeordnet sind.

7. Spritzgiessvorrichtung mit einer Haltevorrichtung (1) gemäss einem der vorangehenden Patentansprüche **dadurch gekennzeichnet, dass** die zweiten Lagerblöcke (11) in Längsrichtung (x) ausserhalb der ersten Lagerblöcke (6) angeordnet sind.

8. Spritzgiessvorrichtung mit einer Haltevorrichtung (1) gemäss einem der vorangehenden Patentansprüche **dadurch gekennzeichnet, dass** die zweiten Lagerblöcke (11) gegenüber der Basis (5) in Längsrichtung (x) und/oder in vertikaler Richtung (z) schwimmend gelagert sind.

9. Spritzgiessvorrichtung mit einer Haltevorrichtung (1) gemäss einem der vorangehenden Patentansprüche, **dadurch gekennzeichnet, dass** die zweiten Lagerblöcke (11) gegenüber den ersten Lagerblöcken (6) justierbar angeordnet sind.

10. Spritzgiessvorrichtung mit einer Haltevorrichtung (1) gemäss einem der vorangehenden Patentansprüche, **dadurch gekennzeichnet, dass** zweite Lagerblöcke (11) paarweise an einer Führungsschiene (12) angeordnet sind.

11. Spritzgiessvorrichtung mit einer Haltevorrichtung (1) gemäss Patentanspruch 10, **dadurch gekennzeichnet, dass** die zweiten Lagerblöcke (11) in einem Abstand (a) entlang der zweiten Führungsschienen (12) zueinander angeordnet sind.

12. Spritzgiessvorrichtung mit einer Haltevorrichtung (1) gemäss einem der vorangehenden Patentansprüche, **dadurch gekennzeichnet, dass** die zweiten Lagerblöcke (11) bezüglich einer Drehachse (3) des Formmittelteils (2) diagonal zueinander angeordnet sind.

13. Spritzgiessvorrichtung mit einer Haltevorrichtung (1) gemäss einem der vorangehenden Patentansprüche, **dadurch gekennzeichnet, dass** mindestens ein zweiter Lagerblock (11) über einen Adapter (14) mit der Basis (5) wirkverbunden ist.

14. Spritzgiessvorrichtung mit einer Haltevorrichtung (1) gemäss einem der vorangehenden Patentansprüche, **dadurch gekennzeichnet, dass** die Basis (5) mehrteilig ausgestaltet ist.

15. Spritzgiessvorrichtung mit einer Haltevorrichtung (1) gemäss einem der vorangehenden Patentansprüche, **dadurch gekennzeichnet, dass** die Haltevorrichtung (1) eine obere Haltevorrichtung (20) umfasst, mittels der der drehbare Mittelteil (2) gegenüber den oberen beiden Holmen (4) der Spritzgiessmaschine gelagert ist.

## Claims

1. Injection-molding device with a holding device (1) for a central mold part (2) in an injection-molding machine with
a base (5), which is mounted displaceable in the longitudinal direction (x) of the injection-molding machine in a manner supported via first mounting blocks (6) in the vertical direction (z) with respect to the machine bed (7) of the injection-molding machine,
**characterized in that**
the base (5) is mounted displaceable in the longitudinal direction (x) of the injection-molding machine in a manner supported via second mounting blocks (11) in the circumferential direction with respect to the machine bed (7) of the injection-molding machine.

2. Injection-molding device with a holding device (1) according to Patent Claim 1, **characterized in that** the second mounting blocks (11) are arranged below the first mounting blocks (6) in the vertical direction (z).

3. Injection-molding device with a holding device (1) according to either of the preceding patent claims, **characterized in that** the first mounting blocks (6) are operatively connected to the machine bed via first guide rails (8) and the second mounting blocks (11) are operatively connected to the machine bed via second guide rails (12).

4. Injection-molding device with a holding device (1) according to Patent Claim 3, **characterized in that** the first and second guide rails (8, 12) are arranged at an angle to one another.

5. Injection-molding device with a holding device (1) according to Patent Claim 4, **characterized in that** the angle has a range of between 45° and 90°.

6. Injection-molding device with a holding device (1) according to one of the preceding patent claims, **characterized in that** the second mounting blocks (11) are arranged inside the first mounting blocks (6) in the transverse direction (y).

7. Injection-molding device with a holding device (1) according to one of the preceding patent claims, **characterized in that** the second mounting blocks (11) are arranged outside the first mounting blocks (6) in the longitudinal direction (x).

8. Injection-molding device with a holding device (1) according to one of the preceding patent claims, **characterized in that** the second mounting blocks (11) are mounted in a floating manner in the longitudinal direction (x) and/or in the vertical direction (z) with respect to the base (5).

9. Injection-molding device with a holding device (1) according to one of the preceding patent claims, **characterized in that** the second mounting blocks (11) are arranged adjustable with respect to the first mounting blocks (6).

10. Injection-molding device with a holding device (1) according to one of the preceding patent claims, **characterized in that** second mounting blocks (11) are arranged in pairs on a guide rail (12).

11. Injection-molding device with a holding device (1) according to Patent Claim 10, **characterized in that** the second mounting blocks (11) are arranged at a distance (a) from one another along the second guide rails (12).

12. Injection-molding device with a holding device (1) according to one of the preceding patent claims, **characterized in that** the second mounting blocks (11) are arranged diagonally in relation to one another with respect to an axis of rotation (3) of the central mold part (2).

13. Injection-molding device with a holding device (1) according to one of the preceding patent claims, **characterized in that** at least one second mounting block (11) is operatively connected to the base (5) via an adapter (14).

14. Injection-molding device with a holding device (1) according to one of the preceding patent claims, **characterized in that** the base (5) is configured in multiple parts.

15. Injection-molding device with a holding device (1) according to one of the preceding patent claims, **characterized in that** the holding device (1) comprises an upper holding device (20), by means of which the rotatable central part (2) is mounted with respect to the upper two side rails (4) of the injection-molding machine.

## Revendications

1. Dispositif de moulage par injection comportant un dispositif de retenue (1) pour une partie centrale de moule (2) dans une machine de moulage par injection comportant
une base (5), laquelle est montée de façon déplaçable dans la direction longitudinale (x) de la machine de moulage par injection de manière supportée par le biais de premiers blocs de palier (6) dans la direction verticale (z) par rapport au bâti (7) de la machine de moulage par injection,
**caractérisé en ce que**
la base (5) est montée de façon déplaçable dans la direction longitudinale (x) de la machine de moulage par injection de manière supportée par le biais de deuxièmes blocs de palier (11) dans la direction périphérique par rapport au bâti (7) de la machine de moulage par injection.

2. Dispositif de moulage par injection comportant un dispositif de retenue (1) selon la revendication 1, **caractérisé en ce que** les deuxièmes blocs de palier (11) sont disposés en dessous des premiers blocs de palier (6) dans la direction verticale (z).

3. Dispositif de moulage par injection comportant un dispositif de retenue (1) selon l'une des revendications précédentes, **caractérisé en ce que** les premiers blocs de palier (6) sont reliés fonctionnellement au bâti de machine par le biais de premiers rails de guidage (8) et les deuxièmes blocs de palier (11) sont reliés fonctionnellement au bâti de machine par le biais de deuxièmes rails de guidage (12).

4. Dispositif de moulage par injection comportant un dispositif de retenue (1) selon la revendication 3, **caractérisé en ce que** les premiers et les deuxièmes rails de guidage (8, 12) sont disposés suivant un angle les uns par rapport aux autres.

5. Dispositif de moulage par injection comportant un dispositif de retenue (1) selon la revendication 4, **caractérisé en ce que** l'angle est compris dans la plage de 45° à 90°.

6. Dispositif de moulage par injection comportant un dispositif de retenue (1) selon l'une des revendications précédentes, **caractérisé en ce que** les deuxièmes blocs de palier (11) sont disposés à l'intérieur des premiers blocs de palier (6) dans la direction transversale (y).

7. Dispositif de moulage par injection comportant un dispositif de retenue (1) selon l'une des revendications précédentes, **caractérisé en ce que** les deuxièmes blocs de palier (11) sont disposés à l'extérieur des premiers blocs de palier (6) dans la direction longitudinale (x).

8. Dispositif de moulage par injection comportant un dispositif de retenue (1) selon l'une des revendications précédentes, **caractérisé en ce que** les deuxièmes blocs de palier (11) sont montés de façon flottante dans la direction longitudinale (x) et/ou dans la direction verticale (z) par rapport à la base (5).

9. Dispositif de moulage par injection comportant un dispositif de retenue (1) selon l'une des revendications précédentes, **caractérisé en ce que** les deuxièmes blocs de palier (11) sont disposés de manière ajustable par rapport aux premiers blocs de palier (6).

10. Dispositif de moulage par injection comportant un dispositif de retenue (1) selon l'une des revendications précédentes, **caractérisé en ce que** les deuxièmes blocs de palier (11) sont disposés par paires sur un rail de guidage (12).

11. Dispositif de moulage par injection comportant un dispositif de retenue (1) selon la revendication 10, **caractérisé en ce que** les deuxièmes blocs de palier (11) sont disposés à une distance (a) l'un de l'autre le long des deuxièmes rails de guidage (12).

12. Dispositif de moulage par injection comportant un dispositif de retenue (1) selon l'une des revendications précédentes, **caractérisé en ce que** les deuxièmes blocs de palier (11) sont disposés en diagonale l'un par rapport à l'autre par rapport à un axe de rotation (3) de la partie centrale de moule (2).

13. Dispositif de moulage par injection comportant un dispositif de retenue (1) selon l'une des revendications précédentes, **caractérisé en ce qu'**au moins un deuxième bloc de palier (11) est relié fonctionnellement à la base (5) par le biais d'un adaptateur (14).

14. Dispositif de moulage par injection comportant un dispositif de retenue (1) selon l'une des revendications précédentes, **caractérisé en ce que** la base (5) est configurée de manière à présenter plusieurs parties.

15. Dispositif de moulage par injection comportant un dispositif de retenue (1) selon l'une des revendications précédentes, **caractérisé en ce que** le dispositif de retenue (1) comporte un dispositif de retenue supérieur (20) au moyen duquel la partie centrale rotative (2) est montée par rapport aux deux longerons supérieurs (4) de la machine de moulage par injection.
